# EUROPÄISCHE PATENTSCHRIFT

(11) **EP 2 737 224 B1**
(45) Veröffentlichungstag und Bekanntmachung des Hinweises auf die Patenterteilung: **06.09.2017**
(21) Anmeldenummer: 12737491.6
(22) Anmeldetag: 12.07.2012
(51) Int. Cl.: F16C 11/06

(54) **GELENKGEHÄUSE EINES KUGELGELENKS SOWIE VERFAHREN ZUR MONTAGE DES GELENKGEHÄUSES AN EINEM TRÄGERELEMENT**
JOINT HOUSING OF A BALL JOINT AND METHOD FOR MOUNTING THE JOINT HOUSING ON A SUPPORT ELEMENT
CARTER DE JOINT D'UN JOINT À ROTULE ET PROCÉDÉ DE MONTAGE DU CARTER DE JOINT SUR UN ÉLÉMENT DE SUPPORT

(30) Priorität: 28.07.2011 DE 102011108881
(43) Veröffentlichungstag der Anmeldung: 04.06.2014
(73) Patentinhaber: THK Rhythm Automotive GmbH, 40547 Düsseldorf (DE)
(72) Erfinder: FORTHAUS, Uwe, 40223 Duesseldorf (DE); SCHAUMANN, Lothar, 40855 Ratingen (DE); WALTER, Harald, 47179 Duisburg (DE)
(74) Vertreter: Prinz & Partner mbB
(86) Internationale Anmeldenummer: PCT/EP2012/002942
(87) Internationale Veröffentlichungsnummer: WO 2013/013779

(56) Entgegenhaltungen:
- EP-A2- 1 760 337
- DE-U1- 9 206 847
- JP-A- 8 128 438
- JP-A- 10 037 944
- JP-A- 2000 154 821
- US-A- 1 909 430
- US-A- 2 852 288

## Beschreibung

Die Erfindung betrifft ein Gelenkgehäuse eines Kugelgelenks gemäß dem Oberbegriff des Anspruches 1. Darüber hinaus betrifft die Erfindung auch ein Verfahren zur Montage eines solchen Gelenkgehäuses an einem Trägerelement.

Aus Blech geformte Gelenkgehäuse für Kugelgelenke sind bereits allgemein aus dem Stand der Technik bekannt, um den Fertigungsaufwand für die Kugelgelenke zu reduzieren.

So zeigt die gattungsgemäße US 3,284,115 A beispielsweise ein Gelenkgehäuse, welches aus einem topfförmigen, ersten Blechteil und einem ringförmigen, zweiten Blechteil zusammengesetzt ist.

Die EP 1 760 337 A2 offenbart ein Kugelgelenkgehäuse, das aus einem Blechteil besteht, welches den Kugelkopf durch eine Gehäuseöffnung aufnehmen kann. An einem axialen Ende ist das Gehäuse doppellagig ausgeführt und weist einen radialen Fortsatz auf.

Die JP 10-37944 zeigt ebenfalls ein Kugelgelenkgehäuse aus einem Blechteil. Eine Gehäuseöffnung ist an einem axialen Ende des Blechteils vorgesehen und wird durch einen doppellagigen Bereich des Gehäuses begrenzt.

Die DE 92 06 847 offenbart ein Kugelgelenk mit einem Dichtungsbalg, der am Gehäuse des Kugelgelenks mittels eines separaten Halterings befestigt ist.

Aufgabe der Erfindung ist es, ein Gelenkgehäuse für Kugelgelenke zu schaffen, welches bei weiter verringertem Fertigungsaufwand eine hohe Gelenkstabilität und Lebensdauer gewährleistet.

Erfindungsgemäß wird diese Aufgabe gelöst durch ein Gelenkgehäuse der eingangs genannten Art mit den Merkmalen des kennzeichnenden Teils des Anspruches 1. Doppellagig ausgebildet bedeutet hierbei, dass die Wand des Gelenkgehäuses in diesem Bereich aus zwei flächig aneinander anliegenden Blechschichten besteht. Infolge der doppellagigen Ausbildung des Umfangswandabschnitts im Bereich des axialen Endes der Gehäuseöffnung, durch die sich später ein Gelenkzapfen des Kugelgelenks erstrecken kann, ergibt sich mit geringem Aufwand ein äußerst stabiles Gelenkgehäuse.

Der radiale Fortsatz des Blechteils lässt sich fertigungstechnisch mit geringem Aufwand realisieren und trägt zu einer einfachen Montage des Gelenkgehäuses an einem Trägerelement und/oder eines Dichtungsbalgs am Gelenkgehäuse bei.

Auf diese Weise lässt sich der Dichtungsbalg mit minimalem Aufwand am Gelenkgehäuse fixieren. Hierzu wird ein Rand des Dichtungsbalgs in die U-förmige Aufnahme eingeführt und durch Verformung der Aufnahme am Gelenkgehäuse festgeklemmt.

In einer Ausführungsform ist das Blechteil an einem ersten axialen Ende des Umfangswandabschnitts einlagig ausgebildet und weist eine Einbauöffnung auf, durch die der Gelenkzapfen eingeführt werden kann. An einem zweiten axialen Ende des Umfangswandabschnitts ist das Blechteil zweilagig ausgebildet und weist die Gehäuseöffnung auf, wobei ein Gehäusedeckel zum Verschließen der Einbauöffnung vorgesehen ist. Diese Gehäusekonstruktion mit einem Blechteil, das an beiden axialen Enden offen ist, ermöglicht bei der Montage des Gelenkgehäuses an einem Trägerelement eine besonders feste und einfach herstellbare Verbindung zwischen den beiden Bauteilen.

In einer anderen Ausführungsform des Gelenkgehäuses ist das Blechteil zur Aufnahme des Kugelkopfes topfförmig ausgebildet und weist den Umfangswandabschnitt sowie einen Bodenabschnitt auf, wobei der Umfangswandabschnitt an einem ersten axialen Ende durch den Bodenabschnitt verschlossen ist und an einem entgegengesetzten zweiten axialen Ende die Gehäuseöffnung aufweist. Bei dieser Konstruktion lässt sich das Gelenkgehäuse als einstückiges Blechteil ausführen, welches nach der Aufnahme des Kugelkopfes durch einfache plastische Verformung so "geschlossen" werden kann, dass der Kugelkopf schwenkbar im Gelenkgehäuse gehalten ist. Infolge der doppellagigen Ausbildung des Blechteils im Bereich des verformten Abschnitts weist das Gelenkgehäuse auch bei hoher Gelenkbeanspruchung eine hinreichende Stabilität auf.

In dieser Ausführungsform des Gelenkgehäuses kann das topfförmige Blechteil im Übergangsbereich zwischen dem Umfangswandabschnitt und dem Bodenabschnitt doppellagig ausgeführt sein und eine umlaufende Blechfalte bilden. Diese Blechfalte lässt sich mit geringem Aufwand an das topfförmige Blechteil anformen und trägt genau wie das doppellagige Blech am zweiten axialen Ende des Umfangswandabschnitts zu einer erhöhten Stabilität des Gelenkgehäuses bei.

Vorzugsweise erstreckt sich die Blechfalte in axialer Richtung vom zweiten axialen Ende des Umfangswandabschnitts weg und ist von außerhalb des Gelenkgehäuses verformbar. Dadurch lässt sich mittels der umlaufenden Blechfalte auf einfache Art und Weise eine Gelenkvorspannung aufbringen und/oder die Montage des Gelenkgehäuses an einem Trägerelement weiter vereinfachen.

Die Erfindung umfasst im Übrigen auch ein Kugelgelenk mit einem oben beschriebenen Gelenkgehäuse, einem Gelenkzapfen, der einen im Gelenkgehäuse aufgenommenen Kugelkopf und einen Schaft umfasst, sowie mit einem Dichtungsbalg, der einen am Gelenkgehäuse befestigten, ersten axialen Rand und einen am Schaft befestigten, zweiten axialen Rand aufweist, wobei sich der erste axiale Rand des Dichtungsbalgs in die am Gelenkgehäuse angeformte, U-förmige Aufnahme erstreckt, und wobei der erste axiale Rand form- und/oder reibschlüssig in der U-förmigen Aufnahme befestigt ist. Der Dichtungsbalg lässt sich somit ohne separate Montageelemente wie Klemm- oder Spannringe auf besonders einfache Art und Weise am Gelenkgehäuse montieren.

In einem nicht erfinderischem Beispiel umfasst das Kugelgelenk ein oben beschriebenes Gelenkgehäuse, einen Gelenkzapfen, der einen im Gelenkgehäuse aufgenommenen Kugelkopf und einen Schaft aufweist, sowie einen Dichtungsbalg, der einen am Gelenkgehäuse befestigten, ersten axialen Rand und einen am Schaft befestigten, zweiten axialen Rand aufweist, wobei ein freier Rand des doppellagig ausgebildeten Abschnitts des Blechteils an den Dichtungsbalg angrenzt und einen axialen Anschlag für dessen ersten axialen Rand bildet. Der Anschlag zur axialen Fixierung des Dichtungsbalgs entsteht in diesem Fall "automatisch" bei der Herstellung des Gelenkgehäuses, konkret beim Umformen des Blechteils zur Bildung des doppellagigen Abschnitts. Somit entfällt der übliche Aufwand zur Herstellung spezieller Nuten oder Absätze im Gelenkgehäuse, um den gewünschten Anschlag zu bilden.

Ferner betrifft die Erfindung auch eine Baugruppe mit einem oben beschriebenen Gelenkgehäuse sowie einem Trägerelement, das eine von einem Halteabschnitt umgebene Montageöffnung aufweist, wobei sich der Umfangswandabschnitt des Gelenkgehäuses durch die Montageöffnung erstreckt, und wobei der Halteabschnitt den Umfangswandabschnitt des Gelenkgehäuses mit einer solchen Vorspannung umgibt, dass das Gelenkgehäuse reibschlüssig im Halteabschnitt fixiert ist. Der Vorteil einer solchen Reibschlussverbindung zwischen dem Gelenkgehäuse und dem Trägerelement liegt im Vergleich zu herkömmlichen Schraub- oder Schweißverbindungen in einem erheblich reduzierten Fertigungsaufwand.

Das Blechteil kann dabei mit Abstützflächen versehen sein, die in axialer Richtung am Halteabschnitt anliegen, insbesondere in Form von stufenförmigen Aufweitungen an einem ersten axialen Ende des Umfangswandabschnitts und/oder einem doppellagigen Wandabschnitt an einem zweiten axialen Ende des Umfangswandabschnitts.

Die Erfindung umfasst schließlich noch ein Verfahren zur Montage eines Gelenkgehäuses an einem Trägerelement mit folgenden Schritten:
- es wird ein oben beschriebenes Gelenkgehäuse bereitgestellt;
- es wird ein Trägerelement mit einer Montageöffnung bereitgestellt;
- das Blechteil des Gelenkgehäuse wird axial in die Montageöffnung eingeführt, bis dessen Umfangswandabschnitt an einen Rand der Montageöffnung angrenzt; und
- das Blechteil wird plastisch so umgeformt, dass es formschlüssig und/oder kraftschlüssig am Trägerelement befestigt ist.

Dieses Verfahren bietet den Vorteil, dass der Montageaufwand durch die Formschluss- und/oder Kraftschlussverbindung im Vergleich zu herkömmlichen Schraub- oder Schweißverbindungen deutlich reduziert wird, ohne die Stabilität oder Dauerhaftigkeit der Verbindung negativ zu beeinflussen.

In einer Verfahrensvariante greift ein Umformwerkzeug in das Blechteil ein und weitet den Umfangswandabschnitt durch plastische Umformung radial so auf, dass zwischen dem Umfangswandabschnitt und dem Rand der Montageöffnung eine kraftschlüssige Verbindung entsteht. Da die Montage des Gelenkgehäuses am Trägerelement vor der Herstellung des Kugelgelenks stattfindet, kann das Werkzeug problemlos in das Gelenkgehäuse eingeführt werden und den Umfangswandabschnitt des Blechteils mit geringem Aufwand plastisch umformen.

Besonders bevorzugt wird durch das Umformwerkzeug auch die Montageöffnung des Trägerelements radial aufgeweitet. Durch die plastische Aufweitung des Umfangswandabschnitts wird zunächst ein vorhandener Spalt zum Rand der Montageöffnung geschlossen. Um eine umlaufend spaltfreie und damit besonders feste und dauerhafte Kraftschlussverbindung zu erhalten, hat es sich als vorteilhaft erwiesen, wenn das Blechteil nach dem Schließen des Spalts noch weiter verformt wird, so dass sich auch die Montageöffnung des Trägerelement durch plastische Umformung radial aufweitet. Als Werkzeug kommt üblicherweise ein Kalibrierstempel zum Einsatz, der den Umfangswandabschnitt des Blechteils exakt auf einen gewünschten Durchmesser aufweitet.

Das Blechteil weist an einem freien Rand des doppellagig ausgebildeten Abschnitts einen radialen Fortsatz auf, wobei das Gelenkgehäuse in die Montageöffnung des Trägerelements eingeschoben wird, bis sich der radiale Fortsatz an einem Rand der Montageöffnung abstützt. Dies erleichtert die axiale Positionierung des Gelenkgehäuses relativ zum Trägerelement. Außerdem verhindert der axiale Anschlag zwischen dem Gelenkgehäuse und dem Trägerelement deren axiale Relativbewegung und unterstützt somit die in axialer Richtung vorhandene Kraftschlussverbindung der Bauteile.

In einer weiteren Verfahrensvariante ist der Rand der Montageöffnung so ausgebildet, dass sich ein Durchmesser der Montageöffnung in axialer Richtung zum doppellagig ausgebildeten Abschnitt des Umfangswandabschnitts hin verringert, insbesondere stufenweise verringert, wobei in das Blechteil ein der Randkontur der Montageöffnung angepasstes Umformwerkzeug eingreift und den Umfangswandabschnitt des Blechteils im Bereich der Montageöffnung formschlüssig zur Randkontur der Montageöffnung umformt. Dadurch kann die in axialer Richtung vorhandene Kraftschlussverbindung zwischen dem Gelenkgehäuse und dem Trägerelement auf einfache Weise durch eine zusätzliche Formschlussverbindung unterstützt werden.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 einen Längsschnitt durch ein nicht erfindungsgemässes Gelenkgehäuse;
- Figur 2 einen Längsschnitt durch ein erfindungsgemäßes Gelenkgehäuse gemäß einer ersten Ausführungsform;
- Figur 3 eine Explosionsansicht eines Kugelgelenks mit einem Gelenkgehäuse gemäß Figur 2;
- Figuren 4 bis 10 einzelne Verfahrensschritte zur Herstellung und Montage eines erfindungsgemäßen Kugelgelenks unter Verwendung des Gelenkgehäuses gemäß Figur 2;
- Figuren 11 bis 15 weitere Ausführungsformen von erfindungsgemäßen Kugelgelenken mit Gelenkgehäusen gemäß der Figur 2;
- Figuren 16 und 17 einen Längsschnitt durch ein nicht erfindungsgemässes Gelenkgehäuse;
- Figur 18 einen Längsschnitt durch ein erfindungsgemäßes Gelenkgehäuse gemäß einer zweiten Ausführungsform;
- Figuren 19 bis 24 einzelne Verfahrensschritte eines erfindungsgemäßen Verfahrens zur Montage eines Gelenkgehäuses an einem Trägerelement unter Verwendung des erfindungsgemäßen Gelenkgehäuses gemäß Figur 18; und
- Figur 25 ein Kugelgelenk mit einem Gelenkgehäuse gemäß Figur 17.

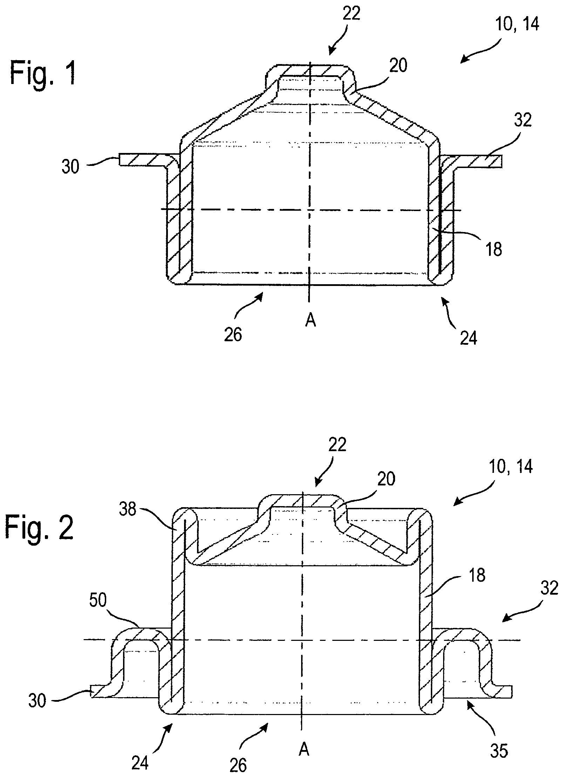

Die Figur 1 zeigt ein Gelenkgehäuse 10 eines Kugelgelenks 12 mit einem bezüglich einer Gelenkachse A im Wesentlichen rotationssymmetrischen Blechteil 14 zur Aufnahme eines Kugelkopfes 16, das einen kreiszylindrischen Umfangswandabschnitt 18 aufweist. Der Umfangswandabschnitt 18 weist an einem axialen Ende 24 eine Gehäuseöffnung 26 auf, durch die sich ein Gelenkzapfen 28 erstrecken kann. Das Blechteil 14 ist am Rand der Gehäuseöffnung 26, d.h. am axialen Ende 24 des Umfangswandabschnitts 18 doppellagig ausgebildet, um im Bereich der Gehäuseöffnung 26 eine größere Gehäusestabilität zu erreichen.

In dem nicht erfindungsgemässen Beispiel gemäß Figur 1 ist das Blechteil 14 zur Aufnahme des Kugelkopfes 16 topfförmig ausgebildet und weist den Umfangswandabschnitt 18 sowie einen Bodenabschnitt 20 auf, wobei der Umfangswandabschnitt 18 an einem ersten axialen Ende 22 durch den Bodenabschnitt 20 verschlossen ist und an einem entgegengesetzten zweiten axialen Ende 24 die Gehäuseöffnung 26 aufweist.

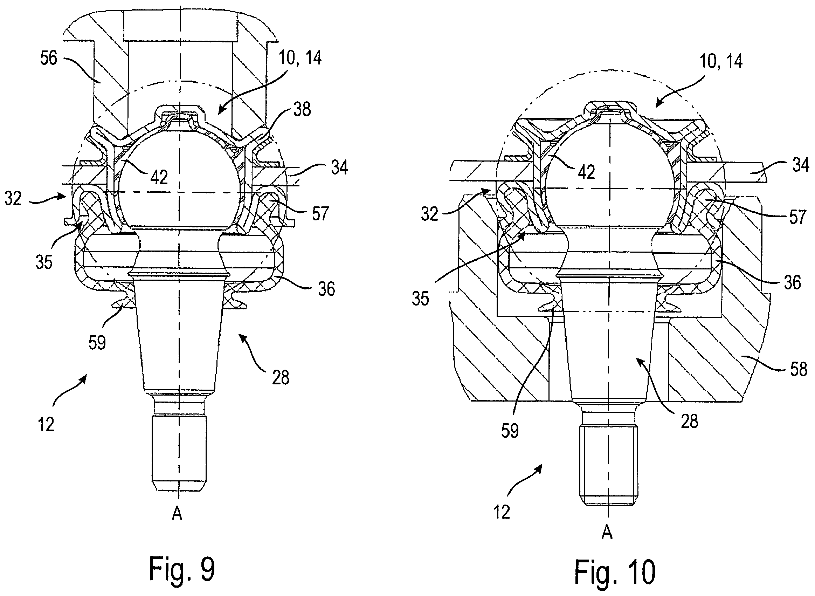

Darüber hinaus weist das Blechteil 14 an einem freien Rand 30 des doppellagig ausgebildeten Abschnitts einen radialen Fortsatz 32 zur form- und/oder stoffschlüssigen Verbindung mit einem Trägerelement 34 auf (siehe auch Figuren 10 bis 16).

Das als topfförmiges Blechteil 14 ausgebildete, einstückige Gelenkgehäuse 10 mit wenigstens einem doppellagig ausgebildeten Abschnitt ist dabei vorzugsweise aus Stahlblech oder Organoblech hergestellt.

Genau wie die Figur 1 zeigt auch die Figur 2 einen Längsschnitt durch das Gelenkgehäuse 10 eines Kugelgelenks 12, allerdings gemäß einer ersten erfindungsgemässen Ausführungsform. Einander entsprechende Merkmale der beiden Gelenkgehäuse 10 sind dabei mit identischen Bezugszeichen versehen. In Bezug auf die gemeinsamen Merkmale wird explizit auf die obige Beschreibung zu Figur 1 verwiesen und im Folgenden lediglich auf Unterschiede sowie die daraus resultierenden Vorteile des Gelenkgehäuses 10 gemäß Figur 2 eingegangen.

So ist beispielsweise im Unterschied zur Ausführungsform gemäß Figur 1 der radiale Fortsatz 32 des Gelenkgehäuses 10 gemäß Figur 2 im axialen Längsschnitt gesehen als U-förmige Aufnahme 35 für einen Dichtungsbalg 36 ausgebildet (siehe auch Figuren 9 bis 16). Dadurch lässt sich der Dichtungsbalg 36 einfach am Gelenkgehäuse 10 befestigen, und es kann auf zusätzliche, separate Befestigungselemente wie Klemm- oder Spannringe verzichtet werden.

Darüber hinaus zeichnet sich das Gelenkgehäuse 10 gemäß Figur 2 dadurch aus, dass das topfförmige Blechteil 14 in einem Übergangsbereich zwischen dem Umfangswandabschnitt 18 und dem Bodenabschnitt 20 doppellagig ausgeführt ist und eine umlaufende Blechfalte 38 bildet.

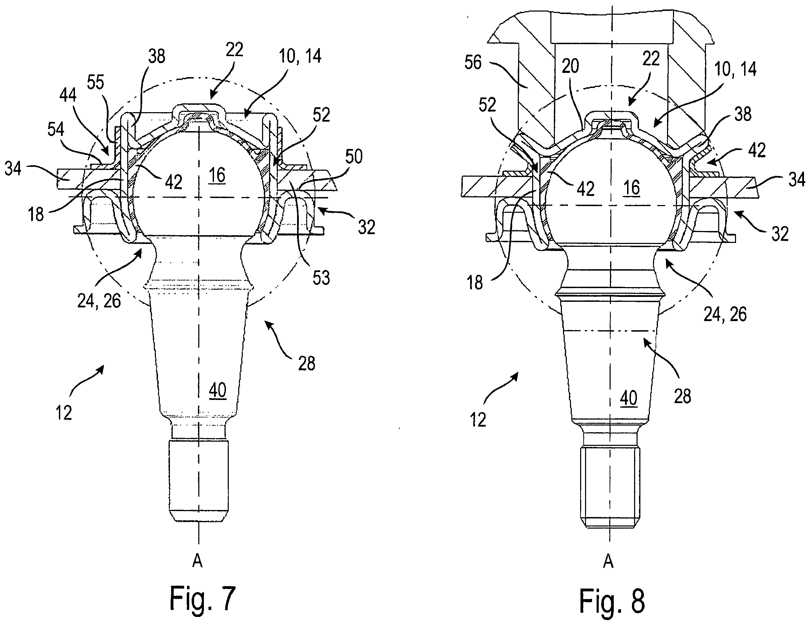

Gemäß Figur 2 erstreckt sich die Blechfalte 38 in axialer Richtung vom zweiten axialen Ende 24 des Umfangswandabschnitts 18 weg und ist von außerhalb des Gelenkgehäuses 10 verformbar (vgl. Figur 8).

Das doppellagige Blech im Bereich der umlaufenden Blechfalte 38 trägt genau wie das doppellagige Blech am zweiten axialen Ende 24 des Umfangswandabschnitts 18 zu einer hohen Stabilität des Gelenkgehäuses 10 und damit letztlich auch zur erwünschten Dauerhaftigkeit des Kugelgelenks 12 bei. Darüber hinaus ist die umlaufenden Blechfalte 38 auch deshalb vorteilhaft, weil bei deren Verformung mit geringem Aufwand eine gewünschte Gelenkvorspannung aufgebracht und/oder das Gelenkgehäuse 10 mittels einer Formschlussverbindung am Trägerelement 34 montiert werden kann.

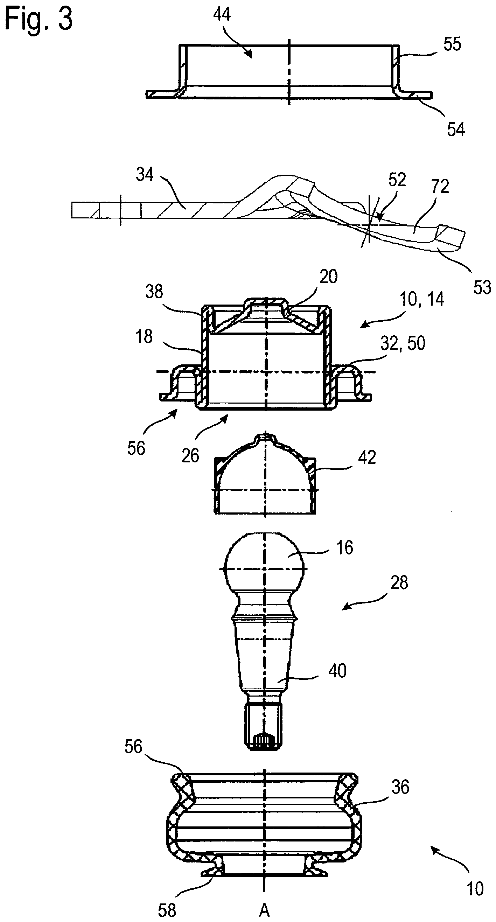

Die Figur 3 zeigt das Trägerelement 34 und das Kugelgelenk 12 mit dem Gelenkgehäuse 10 gemäß Figur 2 in einer Explosionsansicht, anhand der die verschiedenen Einzelbauteile gut zu erkennen sind.

Außer dem Trägerelement 34 und dem Gelenkgehäuse 10 umfasst das Kugelgelenk 12 gemäß Figur 3 den Gelenkzapfen 28 mit dem Kugelkopf 16 und einem Schaft 40, den Dichtungsbalg 36 zum Schutz des Kugelgelenks 12, eine Lagerschale 42 zur Aufnahme des Kugelkopfs 16 sowie einen Stützring 44 zur Befestigung des Kugelgelenks 12 am Trägerelement 34.

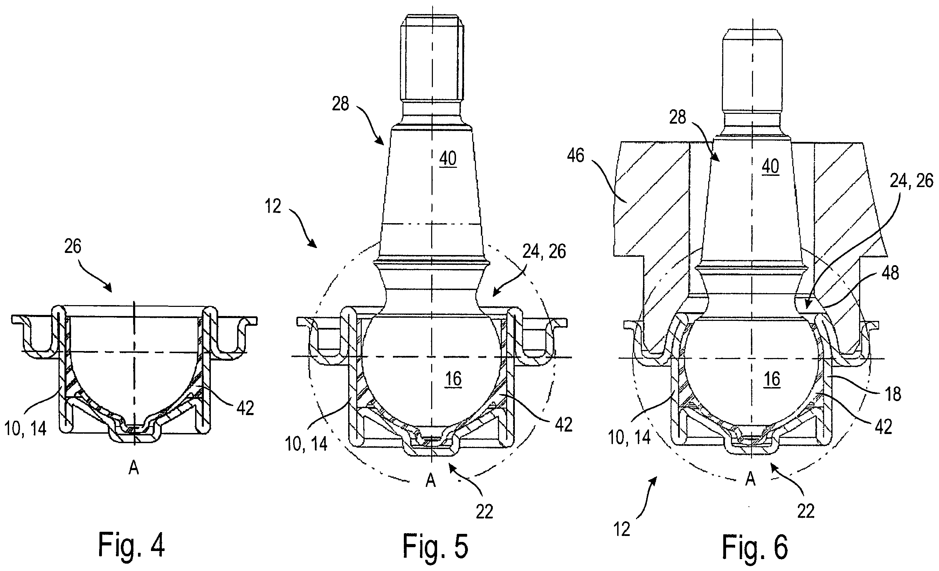

Anhand der Figuren 4 bis 10 ist ein Verfahren zur Herstellung und Montage des Kugelgelenks 12 dargestellt, wobei die Figuren 4 bis 6 Verfahrensschritte zur Herstellung des Kugelgelenks 12 und die Figuren 7 bis 10 Verfahrensschritte zur Montage des Kugelgelenks 12 am Trägerelement 34 zeigen.

Zu Beginn des Verfahrens wird das Gelenkgehäuse 10 bereitgestellt, welches bevorzugt aus Stahlblech oder Organoblech hergestellt und beispielsweise zu einem topfförmigen Blechteil 14 gemäß Figur 2 umgeformt ist.

In einem nachfolgenden Verfahrensschritt wird die vorzugsweise aus Kunststoff vorgefertigte Lagerschale 42 axial in das topfförmige Blechteil 14 eingebracht, sodass sich eine Baugruppe gemäß Figur 4 ergibt.

Anschließend wird der Kugelkopf 16 des Gelenkzapfens 28 axial in das Gelenkgehäuse 10 und die Lagerschale 42 eingeführt, wobei die in Figur 5 abgebildete Baugruppe entsteht.

In einem weiteren Verfahrensschritt gemäß Figur 6 wird das Gelenkgehäuse 10, konkret der an die Gehäuseöffnung 26 angrenzende, doppellagig ausgebildete Abschnitt des topfförmigen Blechteils 14 plastisch so verformt, dass der Gelenkzapfen 28 relativ zum Gelenkgehäuse 10 axial gehalten ist. Dabei greift ein ringförmiges Umformwerkzeug 46 am zweiten axialen Ende 24 des Umfangswandabschnitts 18 an und verformt das Gelenkgehäuse 10 so, dass sich ein Durchmesser der Gehäuseöffnung 26 verringert. Im vorliegenden Fall verjüngt sich eine Kontaktfläche 48 des Umformwerkzeugs 46 in Richtung vom ersten axialen Ende 22 zum zweiten axialen Ende 24 hin, wodurch das Umformwerkzeug 46 lediglich axial in Richtung vom zweiten axialen Ende 24 zum ersten axialen Ende 22 auf das Gelenkgehäuse 10 aufgepresst werden muss, um das Gelenkgehäuse 10 in der gewünschten Art und Weise zu "schließen".

Mit Ausnahme der Montage des Dichtungsbalgs 36 ist die eigentliche Herstellung des Kugelgelenks 12 nach diesem Verfahrensschritt bereits weitgehend abgeschlossen, da der Gelenkzapfen 28, angrenzend an die Lagerschale 42, schwenkbar im Gelenkgehäuse 10 gehalten ist.

Die Figuren 7 bis 10 zeigen nunmehr die Montage des Kugelgelenks 12 am Trägerelement 34, wobei sich diese Montage unmittelbar an die Herstellung des Kugelgelenks 12 anschließen kann.

Ausgehend von Figur 6 weist das Gelenkgehäuse 10 den U-förmig ausgebildeten, radialen Fortsatz 32 auf, der eine zum ersten axialen Ende 22 gerichtete, axiale Lagerfläche 50 für das Trägerelement 34 umfasst. Das Gelenkgehäuse 10 wird zur Montage des Kugelgelenks 12 axial in eine Montageöffnung 52 des Trägerelements 34 eingeschoben, bis sich der radiale Fortsatz 32 mit seiner Lagerfläche 50 an einem Rand 53 der Montageöffnung 52 abstützt. Der radiale Fortsatz 32 bildet somit ein axiales Widerlager für das Trägerelement 34 und vereinfacht demzufolge die Montage des Kugelgelenks 12 am Trägerelement 34.

Anschließend wird der im Querschnitt L-förmige Stützring 44 vom ersten axialen Ende 22 her so auf das Gelenkgehäuse 10 gesteckt, dass ein Schenkel 54 des L-förmigen Querschnitts am Rand 53 der Montageöffnung 52 anliegt und ein weiterer Schenkel 55 des L-förmigen Querschnitts außenseitig an den Umfangswandabschnitt 18 angrenzt, vorzugweise passgenau an diesem anliegt (vgl. Figur 7). Der Schenkel 55 erstreckt sich dabei in axialer Richtung vom einlagigen Umfangswandabschnitt 18 des topfförmigen Blechteils 14 bis hin zur umlaufenden Blechfalte 38.

In einem nachfolgenden Verfahrensschritt gemäß Figur 8 wird die umlaufende Blechfalte 38 sowie der Stützring 44 mittels eines weiteren ringförmigen Umformwerkzeugs 56 plastisch verformt. Durch diese Verformung wird das Trägerelement 34 mittels des Stützrings 44 in axialer Richtung zwischen die Blechfalte 38 und den radialen Fortsatz 32 des Gelenkgehäuses 10 geklemmt. Vorzugsweise entspricht ein Durchmesser der Montageöffnung 52 passgenau einem Außendurchmesser des Umfangswandabschnitts 18, so dass das Trägerelement 34 auch senkrecht zur Gelenkachse A am Gelenkgehäuse 10 fixiert ist. Insgesamt ergibt sich folglich eine Formschlussverbindung, die das Kugelgelenk 12 fest mit dem Trägerelement 34 verbindet.

Mit anderen Worten wird das Trägerelement 34 durch die plastische Verformung der umlaufenden Blechfalte 38 axial gegen den radialen Fortsatz 32 des topfförmigen Blechteils 14 beaufschlagt.

Außerdem wird der Kugelkopf 16 bei der Verformung der umlaufenden Blechfalte 38 vom Bodenabschnitt 20 des Blechteils 14 axial in Richtung zum zweiten Ende 24 des Umfangswandabschnitts 18 beaufschlagt. Da die Verformung der Blechfalte 38 erst nach dem Schließen des Gelenkgehäuses 10, d.h. nach der Umformung am zweiten axialen Ende 24 des Umfangswandabschnitts 18 (vgl. Figur 6) erfolgt, kann sich der Kugelkopf 16 nicht mehr oder nur noch geringfügig in Richtung zum zweiten Ende 24 des Umfangswandabschnitts 18 bewegen. Folglich wird durch die Verformung der Blechfalte 38 die elastische Lagerschale 42 axial vorgespannt und somit eine üblicherweise gewünschte Gelenkvorspannung aufgebracht. Diese Gelenkvorspannung verlängert in vorteilhafter Weise den Zeitraum, in dem der Kugelkopf 16 weitgehend spielfrei in der Lagerschale 42 sowie dem Gelenkgehäuse 10 aufgenommen ist.

Wie bereits erwähnt ist der radiale Fortsatz 32 im vorliegenden Ausführungsbeispiel als umlaufende, U-förmige Aufnahme 35 ausgebildet, wobei ein erster axialer Rand 57 des Dichtungsbalgs 36 in die Aufnahme 35 eingeführt (vgl. Figur 9) und durch plastisches Verformen der U-förmigen Aufnahme 35 mittels eines weiteren Umformwerkzeugs 58 am Gelenkgehäuse 10 festgeklemmt wird (vgl. Figur 10). Auf diese Weise bildet der radiale Fortsatz 32 nicht nur ein Widerlager für das Trägerelement 34, sondern fixiert auch auf einfache und vorteilhafte Weise den Dichtungsbalg 36 am Gelenkgehäuse 10 des Kugelgelenks 12.

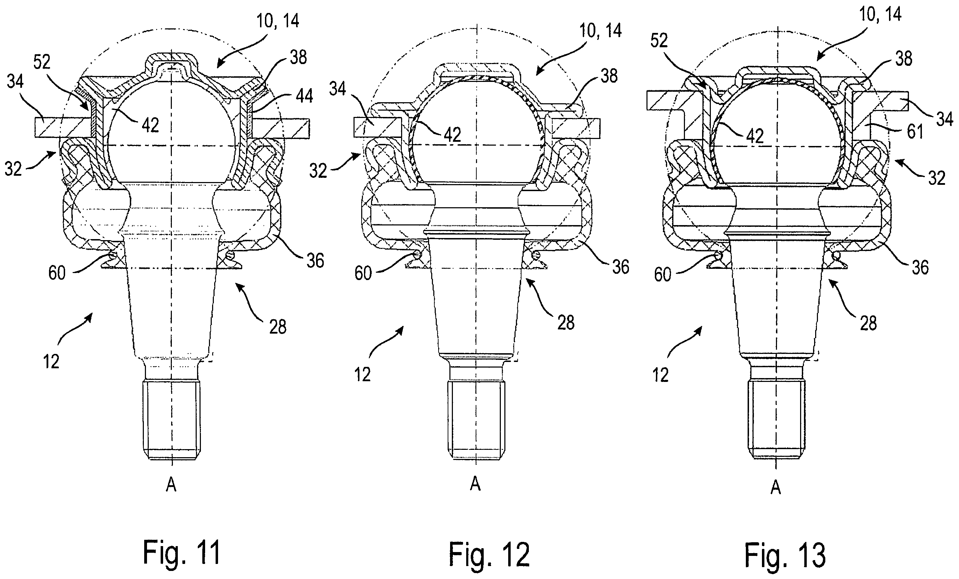

Schließlich muss am entgegengesetzten zweiten axialen Rand 59 des Dichtungsbalgs 36 lediglich noch ein Klemm- oder Spannring 60 gemäß den Figuren 11 bis 15 angebracht werden, um den Dichtungsbalg 36 auch am Schaft 40 des Gelenkzapfens 28 sicher zu befestigen.

Danach ist das Kugelgelenk 12 zum einen fertiggestellt und zum anderen bereits in vorteilhafter Weise am Trägerelement 34 montiert. Dieses Trägerelement 34 ist beispielsweise ein aus Stahlblech, Aluminium oder Kunststoff hergestellter Querlenker einer Kraftfahrzeuglenkung. Alternativ ist das Trägerelement 34 ein Verbindungsbauteil gemäß Figur 3, welches beispielsweise an einen Querlenker angeflanscht wird.

Die Figuren 11 bis 15 zeigen weitere Ausführungsformen von Kugelgelenken 12, die an einem Trägerelement 34 montiert sind und ein Gelenkgehäuse 10 gemäß Figur 2 aufweisen.

Das Kugelgelenk 12 gemäß Figur 11 unterscheidet sich lediglich durch den verwendeten Stützring 44 von der Ausführungsform gemäß Figur 10. Der Stützring 44 liegt in Figur 10 auf einer axialen Stirnseite des Trägerelements 34 auf, wohingegen er in Figur 11 zwischen dem Gelenkgehäuse 10 und dem Trägerelement 34 radial in die Montageöffnung 52 eingesteckt oder eingepresst ist.

In der Ausführungsform gemäß Figur 12 ist kein Stützring 44 vorgesehen, so dass die umlaufende Blechfalte 38 des Gelenkgehäuses 10 unmittelbar am Trägerelement 34 anliegt.

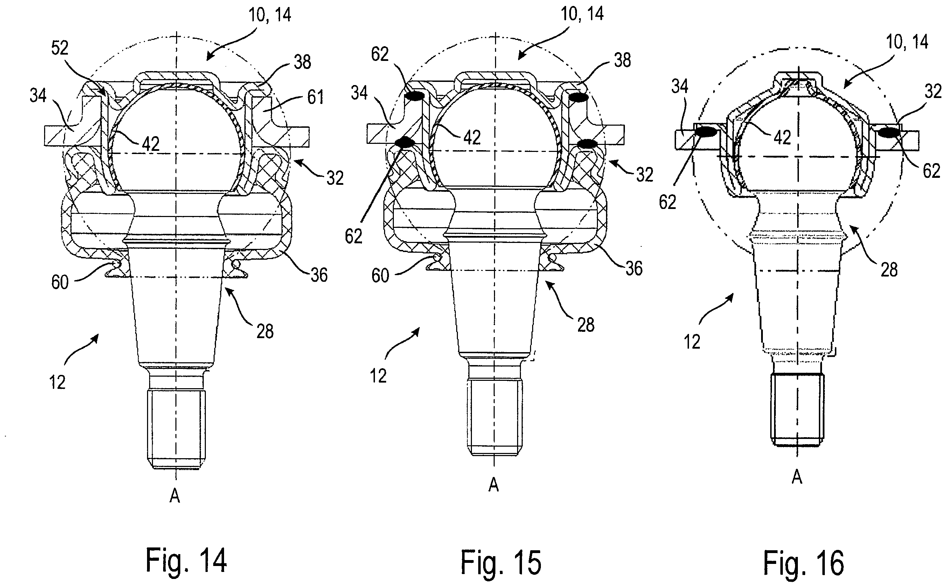

Bei den Kugelgelenken 12 gemäß den Figuren 13 und 14 weist das Trägerelement 34 im Bereich seiner Montageöffnung 52 einen Kragen 61, d.h. einen axial umgeformten Randabschnitt auf, um den radialen Kontaktbereich zwischen dem Gelenkgehäuse 10 und dem Trägerelement 34 zu vergrößern. Die Ausführungsform des Kugelgelenks gemäss Figur 15 verdeutlicht, dass die formschlüssige Verbindung zwischen dem Trägerelement 34 und dem Gelenkgehäuse 10 auch mit einer stoffschlüssigen Verbindung 62, beispielsweise einer Schweiß- oder Klebeverbindung, kombiniert werden kann. Dies gilt sowohl für Gelenkgehäuse 10 gemäß Figur 2 (vgl. Figur 15) als auch für die nicht erfinderische Gehäuseausführung gemäß Figur 1 (vgl. Figur 16).

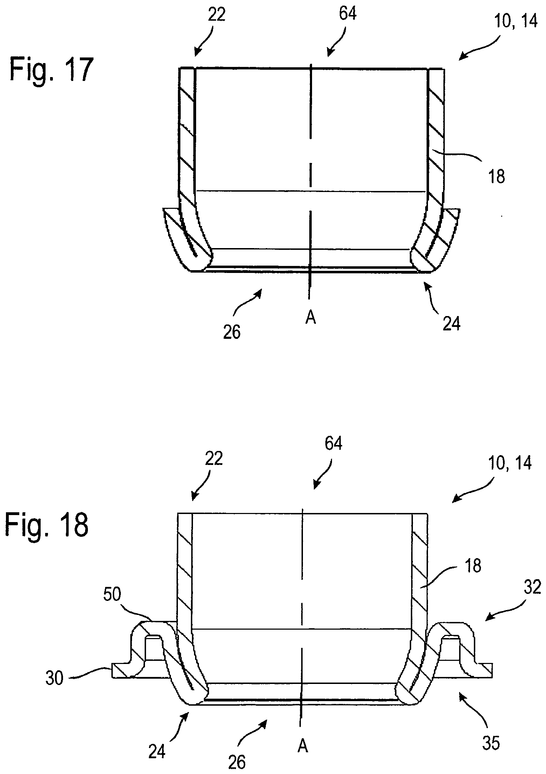

Genau wie die Figuren 1 und 2 zeigen auch die Figuren 17 und 18 jeweils einen Längsschnitt durch das Gelenkgehäuse 10 eines Kugelgelenks 12, allerdings gemäß eines nicht erfinderischen Beispiels (Figur 17) bzw. einer erfinderischen zweiten Ausführungsform (Figur 18). Einander entsprechende Merkmale der jeweiligen Gelenkgehäuse 10 sind dabei mit identischen Bezugszeichen versehen. In Bezug auf die gemeinsamen Merkmale wird explizit auf die obige Beschreibung zu den Figuren 1 bis 3 verwiesen und im Folgenden lediglich auf Unterschiede sowie die daraus resultierenden Vorteile der Gelenkgehäuse 10 gemäß den Figuren 17 und 18 eingegangen.

Die Figuren 17 und 18 zeigen jeweils ein Gelenkgehäuse 10 eines Kugelgelenks 12, mit einem bezüglich einer Gelenkachse A im Wesentlichen rotationssymmetrischen Blechteil 14 zur Aufnahme eines Kugelkopfes 16, wobei das Blechteil 14 einen kreiszylindrischen Umfangswandabschnitt 18 umfasst. Der Umfangswandabschnitt 18 weist an einem axialen Ende 24 eine Gehäuseöffnung 26 auf, durch die sich ein Gelenkzapfen 28 erstrecken kann. Das Blechteil 14 ist am Rand der Gehäuseöffnung 26, d.h. am axialen Ende 24 des Umfangswandabschnitts 18 doppellagig ausgebildet, um im Bereich der Gehäuseöffnung 26 eine größere Gehäusestabilität zu erreichen.

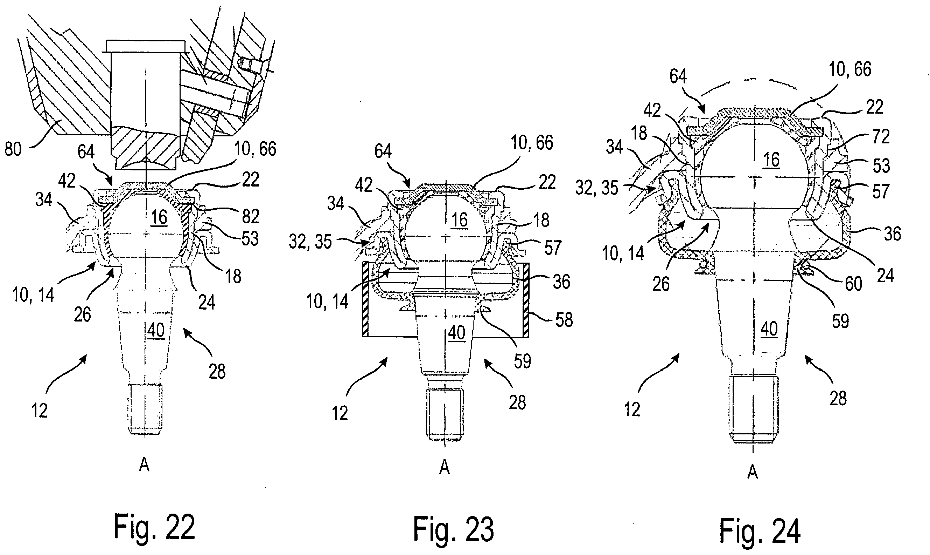

Die Blechteile 14 gemäß den Figuren 17 und 18 sind an einem ersten axialen Ende 22 des Umfangswandabschnitts 18 einlagig ausgebildet und weisen im Unterschied zu den Ausführungen der Figuren 1 und 2 eine Einbauöffnung 64 auf, durch die der Gelenkzapfen 28 eingeführt werden kann. An einem zweiten axialen Ende 24 des Umfangswandabschnitts 18 ist das Blechteil 14 zweilagig ausgebildet und weist die Gehäuseöffnung 26 auf. Das Gelenkgehäuse 10 umfasst in der dritten und vierten Ausführungsform zusätzlich einen Gehäusedeckel 66 zum Verschließen der Einbauöffnung 64 (vgl. Figuren 22 bis 25). Da der Kugelkopf 16 über die Einbauöffnung 64 in das Gelenkgehäuse 10 eingeführt werden kann, ist der an die Gehäuseöffnung 26 angrenzende, doppellagig ausgebildete Abschnitt des Blechteils 14 bereits vorab, d.h. vor Montage des Gelenkgehäuses 10 am Trägerelement 34 sowie vor der Herstellung des Kugelgelenks 12, plastisch so verformt, dass später der Gelenkzapfen 28 relativ zum Gelenkgehäuse 10 axial gehalten ist. Diese Verformung wird in dem nicht erfinderischen Beispiel nach Figur 1 und der ersten erfinderischen Ausführungsform nach Figur 2 des Gelenkgehäuses 10 erst bei der Herstellung des Kugelgelenks 12 vorgenommen (vgl. Figur 6).

Das Blechteil 14 gemäß Figur 18 weist analog zu Figur 2 am freien Rand 30 des doppellagig ausgebildeten Abschnitts den radialen Fortsatz 32 auf, der im axialen Längsschnitt gesehen als U-förmige Aufnahme 35 für den Dichtungsbalg 36 ausgebildet ist (siehe auch Figuren 23 und 24). Dadurch lässt sich der Dichtungsbalg 36 einfach am Gelenkgehäuse 10 befestigen, und es kann auf zusätzliche, separate Befestigungselemente wie Klemm- oder Spannringe verzichtet werden.

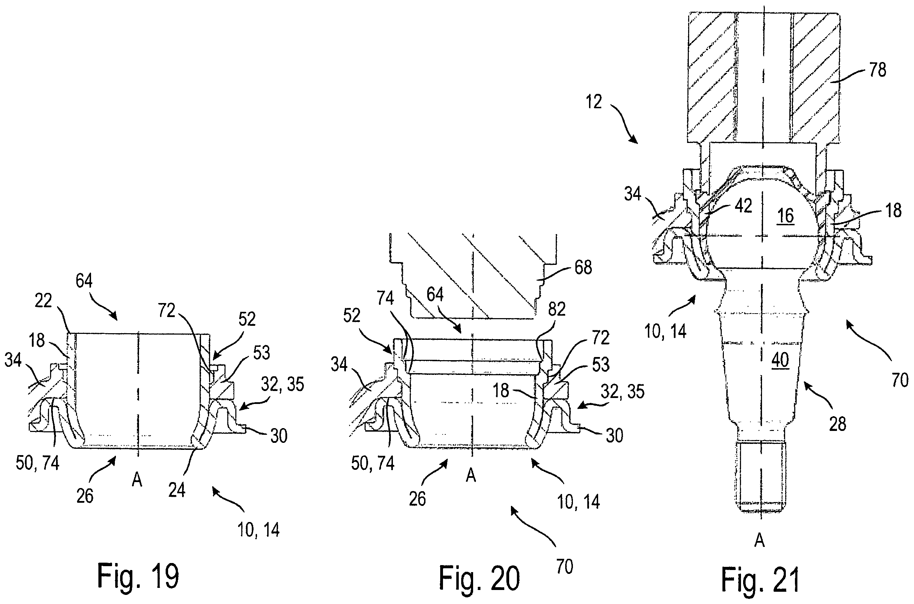

Anhand der Figuren 19 bis 24 ist ein Verfahren zur Montage des Gelenkgehäuses 10 an einem Trägerelement 34 sowie zur Herstellung des Kugelgelenks 12 dargestellt, wobei die Figuren 19 und 20 die Montage des Gelenkgehäuses 10 und die Figuren 21 bis 24 die nachfolgende Herstellung des Kugelgelenks 12 zeigen.

Zu Beginn des Verfahrens werden das Trägerelement 34 sowie das Gelenkgehäuse 10, welches bevorzugt aus Stahlblech oder Organoblech hergestellt und beispielsweise zu einem Blechteil 14 gemäß Figur 18 umgeformt ist, bereitgestellt.

Anschließend wird das Blechteil 14 des Gelenkgehäuses 10 axial in die Montageöffnung 52 eingeführt, bis der Umfangswandabschnitt 18 des Blechteils 14 radial an den Rand 53 der Montageöffnung 52 angrenzt. Gemäß Figur 19 weist das Blechteil 14 am freien Rand 30 des doppellagig ausgebildeten Abschnitts den radialen Fortsatz 32 auf, wobei das Gelenkgehäuse 10 in die Montageöffnung 52 des Trägerelements 34 eingeschoben wird, bis sich der radiale Fortsatz 32 am Rand 53 der Montageöffnung abstützt. Dies erleichtert die axiale Positionierung des Gelenkgehäuses 10 relativ zum Trägerelement 34.

Im nächsten Verfahrensschritt gemäß Figur 20 greift ein Umformwerkzeug 68 in das Blechteil 14 ein und weitet den Umfangswandabschnitt 18 durch plastische Verformung radial so auf, dass zwischen dem Umfangswandabschnitt 18 und dem Rand 53 der Montageöffnung 52 eine kraftschlüssige Verbindung entsteht. Da die Montage des Gelenkgehäuses 10 am Trägerelement 34 vor der Herstellung, d.h. dem Zusammenbau des Kugelgelenks 12 stattfindet, lässt sich das Werkzeug 68 problemlos in das Gelenkgehäuse 10 einführen und kann den Umfangswandabschnitt 18 des Blechteils 14 mit geringem Aufwand plastisch umformen.

Vorzugsweise wird durch das Umformwerkzeug 68 auch die Montageöffnung 52 des Trägerelements 34 radial aufgeweitet. Dies garantiert eine umlaufend spaltfreie und damit besonders feste und dauerhafte Kraftschlussverbindung zwischen dem Gelenkgehäuse 10 und dem Trägerelement 34. Als Werkzeug 68 kommt üblicherweise wenigstens ein Kalibrierstempel zum Einsatz, der den Umfangswandabschnitt 18 des Blechteils 14 exakt auf einen gewünschten Durchmesser aufweitet.

Wie bereits in Figur 19 zu sehen, ist der Rand 53 der Montageöffnung 52 in der dargestellten Ausführungsvariante so ausgebildet, dass sich ein Durchmesser der Montageöffnung 52 in axialer Richtung zum doppellagig ausgebildeten Abschnitt des Umfangswandabschnitts 18 hin stufenweise verringert. Das in das Blechteil 14 eingreifende Umformwerkzeug 68 ist der Randkontur der Montageöffnung 52 angepasst und verformt den Umfangswandabschnitt 18 des Blechteils 14 im Bereich der Montageöffnung 52 formschlüssig zur Randkontur der Montageöffnung 52 (vgl. Figur 20).

Nach der plastischen Umformung des Blechteils 14 und bevorzugt auch des Trägerelements 34 entsteht eine Baugruppe 70 gemäß Figur 20, umfassend das Gelenkgehäuse 10 sowie das Trägerelement 34, welches die vom Rand 53 umgebene Montageöffnung 52 aufweist, wobei der Rand 53 hier einen Halteabschnitt 72 umfasst. Der Halteabschnitt 72 umgibt den Umfangswandabschnitt 18 des Blechteils 14 mit einer solchen Vorspannung, dass das Gelenkgehäuse 10 reibschlüssig im Halteabschnitt 72 gehalten ist.

Obwohl die Reibschlussverbindung das Gelenkgehäuse 10 bereits zuverlässig und dauerhaft am Trägerelement 34 befestigt, ist das Blechteil 14 mit Abstützflächen 74 versehen, die in axialer Richtung am Halteabschnitt 72 anliegen. Diese Abstützflächen sind im vorliegenden Fall zum einen stufenförmigen Aufweitungen am ersten axialen Ende 22 des Umfangswandabschnitts 18 und zum anderen der radiale Fortsatz 32, konkret die Lagerfläche 50 der U-förmigen Aufnahme 35 des Blechteils 14 am zweiten axialen Ende 24 des Umfangswandabschnitts 18. In der dritten Ausführungsform des Gelenkgehäuses 10 gemäß Figur 17 wird die stufenförmige Aufweitung am zweiten axialen Ende 24 des Umfangswandabschnitts 18 durch den doppellagigen Wandabschnitt gebildet.

Nachdem die Montage des Gelenkgehäuses 10 am Trägerelement 34 beendet ist, beginnt nunmehr der Zusammenbau des Kugelgelenks 12. Hierzu wird der Gelenkzapfen 28 in das axial fixierte Blechteil 14 eingeführt und in axialer Richtung federnd gelagert.

Anschließend wird die Lagerschale 42 mittels eines Stempels 78 in den Raum zwischen Kugelkopf 16 und Umfangswandabschnitt 18 eingepresst (vgl. Figur 21).

Danach wird der bevorzugt aus Blech hergestellte Gehäusedeckel 66 aufgesetzt und eingewalzt. Zum Einwalzen des Gehäusedeckels 66 wird gemäß Figur 22 ein Werkzeug 80 verwendet, das den Gehäusedeckel 66 axial gegen einen Anschlag 82 am Blechteil 14 drückt und dann den Umfangswandabschnitt 18 an seinem ersten axialen Ende 22 plastisch umformt.

Schließlich wird der Dichtungsbalg 36 so am Gehäuse positioniert, dass sich ein erster axialer Rand 57 des Dichtungsbalgs 36 in die U-förmige Aufnahme 35 erstreckt, wo er mittels des in Figur 23 nur schematisch angedeuteten Umformwerkzeugs 58 unter plastischer Verformung der U-förmigen Aufnahme 35 eingestemmt wird (vgl. auch Figur 10).

Nach der Montage des Klemm- oder Spannrings 60 ergibt sich das Kugelgelenk 12 gemäß Figur 24, mit dem Gelenkgehäuse 10, dem Gelenkzapfen 28, der den im Gelenkgehäuse 10 aufgenommenen Kugelkopf 16 und den Schaft 40 umfasst, sowie mit dem Dichtungsbalg 36, der den am Gelenkgehäuse 10 befestigten, ersten axialen Rand 57 und einen am Schaft 40 befestigten, zweiten axialen Rand 59 aufweist, wobei sich der erste axiale Rand 57 des Dichtungsbalgs 36 in die am Gelenkgehäuse 10 angeformte, U-förmige Aufnahme 35 erstreckt, und wobei der erste axiale Rand 57 form- und/oder reibschlüssig in der U-förmigen Aufnahme 35 befestigt ist. Der Dichtungsbalg 36 lässt sich somit ohne separate Montageelemente wie Klemm- oder Spannringe auf besonders einfache Art und Weise am Gelenkgehäuse 10 befestigen.

Das anhand der Figuren 19 bis 24 beschriebene Verfahren zur Montage des Gelenkgehäuses 10 am Trägerelement 34 sowie zur Herstellung des Kugelgelenks unter Verwendung eines Gelenkgehäuses 10 gemäß Figur 18 lässt sich analog auch auf die Verwendung eines Gelenkgehäuses 10 gemäß Figur 17 übertragen.

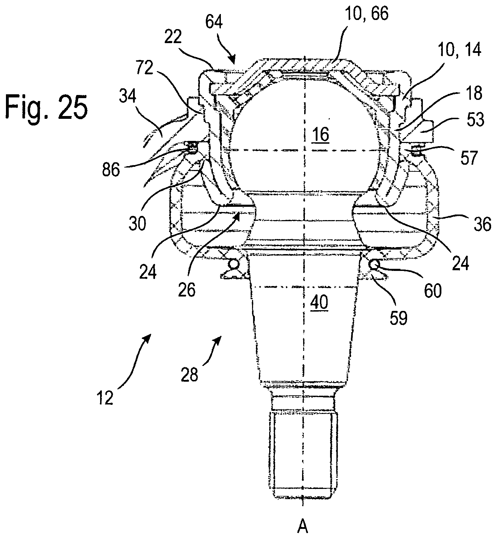

Bei diesem Verfahren entsteht ein nicht erfindungsgemässes Kugelgelenk 12 gemäß Figur 25, mit dem Gelenkgehäuse 10, dem Gelenkzapfen 28, der einen im Gelenkgehäuse 10 aufgenommenen Kugelkopf 16 und einen Schaft 40 aufweist, sowie mit dem Dichtungsbalg 36, der den am Gelenkgehäuse 10 befestigten, ersten axialen Rand 57 und den am Schaft 40 befestigten, zweiten axialen Rand 59 aufweist, wobei ein freier Rand 30 des doppellagig ausgebildeten Abschnitts des Blechteils 14 an den Dichtungsbalg 36 angrenzt und einen axialen Anschlag für dessen ersten axialen Rand 57 bildet.

Der Rand 53 der Montageöffnung 52 bildet in Figur 25 einen weiteren axialen Anschlag für den ersten axialen Rand 57 des Dichtungsbalgs 36, so dass der Dichtungsbalg 36 nach der Montage eines Klemmrings 86, der den ersten axialen Rand 57 radial einwärts beaufschlagt, relativ zum Gelenkgehäuse 10 sicher fixiert ist.

Eine gemäß Figur 25 axial nach oben gerichtete Bewegung des Gelenkgehäuses 10 relativ zum Trägerelement 34 wird in diesem Fall ausschließlich durch die Reibschlussverbindung zwischen dem Umfangswandabschnitt 18 und dem Halteabschnitt 72 verhindert. Der erste axiale Rand 57 des Dichtungsbalgs 36 ist durch die beiden axialen Anschläge lediglich axial gehalten und erfährt keine Belastung durch Gelenkkräfte.

## Patentansprüche

1. Gelenkgehäuse eines Kugelgelenks (12), mit
einem bezüglich einer Gelenkachse (A) im Wesentlichen rotationssymmetrischen Blechteil (14) zur Aufnahme eines Kugelkopfes (16), das einen Umfangswandabschnitt (18) aufweist,
wobei der Umfangswandabschnitt (18) an einem axialen Ende (24) eine Gehäuseöffnung (26) aufweist, durch die sich ein Gelenkzapfen (28) erstrecken kann, **dadurch gekennzeichnet, dass** das Blechteil (14) an diesem axialen Ende (24) des Umfangswandabschnitts (18) doppellagig ausgebildet ist und an einem freien Rand (30) des doppellagig ausgebildeten Abschnitts einen radialen Fortsatz (32) aufweist, und dieser, im axialen Längsschnitt gesehen als U-förmige Aufnahme (35) geeignet zur Aufnahme eines Dichtungsbalgs (36) ausgebildet ist.

2. Gelenkgehäuse nach Anspruch 1, **dadurch gekennzeichnet, dass** das Blechteil (14) an einem ersten axialen Ende (22) des Umfangswandabschnitts (18) einlagig ausgebildet ist und eine Einbauöffnung (64) aufweist, durch die der Gelenkzapfen (28) eingeführt werden kann, sowie an einem zweiten axialen Ende (24) des Umfangswandabschnitts (18) zweilagig ausgebildet ist und die Gehäuseöffnung (26) aufweist, wobei ein Gehäusedeckel (200) zum Verschließen der Einbauöffnung (64) vorgesehen ist.

3. Gelenkgehäuse nach Anspruch 1, **dadurch gekennzeichnet, dass** das Blechteil (14) zur Aufnahme des Kugelkopfes (16) topfförmig ausgebildet ist und den Umfangswandabschnitt (18) sowie einen Bodenabschnitt (20) aufweist, wobei der Umfangswandabschnitt (18) an einem ersten axialen Ende (22) durch den Bodenabschnitt (20) verschlossen ist und an einem entgegengesetzten zweiten axialen Ende (24) die Gehäuseöffnung (26) aufweist.

4. Gelenkgehäuse nach Anspruch 3, **dadurch gekennzeichnet, dass** das topfförmige Blechteil (14) im Übergangsbereich zwischen dem Umfangswandabschnitt (18) und dem Bodenabschnitt (20) doppellagig ausgeführt ist und eine umlaufende Blechfalte (38) bildet.

5. Kugelgelenk **gekennzeichnet durch**, ein Gelenkgehäuse (10) nach einem der vorhergehenden Ansprüche,
einem Gelenkzapfen (28), der einen im Gelenkgehäuse (10) aufgenommenen Kugelkopf (16) und einen Schaft (40) umfasst, sowie
einem Dichtungsbalg (36), der einen am Gelenkgehäuse (10) befestigten, ersten axialen Rand (57) und einen am Schaft (40) befestigten, zweiten axialen Rand (59) aufweist,
wobei sich der erste axiale Rand (57) des Dichtungsbalgs (36) in die am Gelenkgehäuse (10) angeformte, U-förmige Aufnahme (35) erstreckt,
wobei der erste axiale Rand (57) form- und/oder reibschlüssig in der U-förmigen Aufnahme (35) befestigt ist.

6. Baugruppe **gekennzeichnet durch**, ein Gelenkgehäuse (10) nach einem der Ansprüche 1 bis 4, sowie
einem Trägerelement (34), das eine Montageöffnung (52) aufweist, die von einem Halteabschnitt (72) umgeben ist,
wobei sich der Umfangswandabschnitt (18) des Gelenkgehäuses (10) durch die Montageöffnung (52) erstreckt,
wobei der Halteabschnitt (72) den Umfangswandabschnitt (18) des Gelenkgehäuses (10) mit einer solchen Vorspannung umgibt, dass das Gelenkgehäuse (10) reibschlüssig im Halteabschnitt (72) gehalten ist.

7. Baugruppe nach Anspruch 6, **dadurch gekennzeichnet, dass** das Blechteil (14) mit Abstützflächen (74) versehen ist, die in axialer Richtung am Rand (53) anliegen, insbesondere in Form von stufenförmigen Aufweitungen an einem ersten axialen Ende (22) des Umfangswandabschnitts (18) und/oder einem doppellagigen Wandabschnitt an einem zweiten axialen Ende (24) des Umfangswandabschnitts (18).

8. Verfahren zur Montage eines Gelenkgehäuses (10) an einem Trägerelement (34) **gekennzeichnet durch** die folgenden Schritte:
- es wird ein Gelenkgehäuse (10) nach einem der Ansprüche 1 bis 4 bereitgestellt;
- es wird ein Trägerelement (34) mit einer Montageöffnung (52) bereitgestellt;
- das Blechteil (14) des Gelenkgehäuse (10) wird axial in die Montageöffnung (52) eingeführt, bis dessen Umfangswandabschnitt (18) an einen Rand (53) der Montageöffnung (52) angrenzt;
- das Blechteil (14) wird plastisch so umgeformt, dass es formschlüssig und/oder kraftschlüssig am Trägerelement (34) befestigt ist.

9. Verfahren nach Anspruch 8, **dadurch gekennzeichnet, dass** ein Umformwerkzeug (68) in das Blechteil (14) eingreift und den Umfangswandabschnitt (18) durch plastische Umformung radial so aufweitet, dass zwischen dem Umfangswandabschnitt (18) und dem Rand (53) der Montageöffnung (52) eine kraftschlüssige Verbindung entsteht.

10. Verfahren nach Anspruch 9, **dadurch gekennzeichnet, dass** durch das Umformwerkzeug (68) auch die Montageöffnung (52) des Trägerelements (34) radial aufgeweitet wird.

11. Verfahren nach einem der Ansprüche 8 bis 10, **dadurch gekennzeichnet,**
**dass** das Blechteil (14) an einem freien Rand (30) des doppellagig ausgebildeten Abschnitts einen radialen Fortsatz (32) aufweist, wobei das Gelenkgehäuse (10) in die Montageöffnung (52) des Trägerelements (34) eingeschoben wird, bis sich der radiale Fortsatz (32) an einem Rand (53) der Montageöffnung (52) abstützt.

12. Verfahren nach einem der Ansprüche 8 bis 11, **dadurch gekennzeichnet,**
**dass** der Rand (53) so ausgebildet ist, dass sich ein Durchmesser der Montageöffnung (52) in axialer Richtung zum doppellagig ausgebildeten Abschnitt des Umfangswandabschnitts (18) hin verringert, insbesondere stufenweise verringert, wobei in das Blechteil (14) ein der Randkontur der Montageöffnung (52) angepasstes Umformwerkzeug (68) eingreift und den Umfangswandabschnitt (18) des Blechteils (14) im Bereich der Montageöffnung (52) formschlüssig zur Randkontur der Montageöffnung (52) umformt.

## Claims

1. A joint housing of a ball joint (12), comprising
a sheet-metal part (14) for accommodating a ball head (16), which is substantially rotationally symmetrical with respect to a joint axis (A) and includes a circumferential wall portion (18),
wherein the circumferential wall portion (18) includes a housing opening (26) at an axial end (24), through which a joint pin (28) can extend, **characterized in that**
the sheet-metal part (14) is formed with two layers at this axial end (24) of the circumferential wall portion (18) and as a radial tab (32) at a free edge (30) of the portion formed with two layers, and **in that** the latter, as seen in an axial longitudinal section, is formed as U-shaped receptacle (35) adapted to accommodate a sealing bellows (36).

2. The joint housing according to claim 1, **characterized in that** the sheet-metal part (14) is formed with one layer at a first axial end (22) of the circumferential wall portion (18) and includes an insertion opening (64) through which the joint pin (28) can be introduced, and is formed with two layers at a second axial end (24) of the circumferential wall portion (18) and includes the housing opening (26), wherein a housing cover (200) is provided for closing the insertion opening (64).

3. The joint housing according to claim 1, **characterized in that** the sheet-metal part (14) for accommodating the ball head (16) is formed pot-shaped and includes the circumferential wall portion (18) as well as a bottom portion (20), wherein the circumferential wall portion (18) is closed by the bottom portion (20) at a first axial end (22) and at an opposite second axial end (24) includes the housing opening (26).

4. The joint housing according to claim 3, **characterized in that** in the transition region between the circumferential wall portion (18) and the bottom portion (20), the pot-shaped sheet-metal part (14) is designed with two layers and forms a circumferential sheet-metal fold (38).

5. A ball joint, **characterized by**
a joint housing (10) according to any of the preceding claims,
a joint pin (28) which comprises a ball head (16) accommodated in the joint housing (10) and a shank (40), and
a sealing bellows (36) which has a first axial edge (57) attached to the joint housing (10) and a second axial edge (59) attached to the shank (40),
wherein the first axial edge (57) of the sealing bellows (36) extends into the U-shaped receptacle (35) integrally molded to the joint housing (10),
wherein the first axial edge (57) is positively and/or frictionally fixed in the U-shaped receptacle (35).

6. An assembly, **characterized by**
a joint housing (10) according to any of claims 1 to 4, and
a carrier element (34), which includes an assembly opening (52) which is surrounded by a holding portion (72),
wherein the circumferential wall portion (18) of the joint housing (10) extends through the assembly opening (52),
wherein the holding portion (72) surrounds the circumferential wall portion (18) of the joint housing (10) with such a pretension that the joint housing (10) is frictionally held in the holding portion (72).

7. The assembly according to claim 6, **characterized in that** the sheet-metal part (14) is provided with supporting surfaces (74) which rest against the edge (53) in axial direction, in particular in the form of step-like expansions at a first axial end (22) of the circumferential wall portion (18) and/or a double-layer wall portion at a second axial end (24) of the circumferential wall portion (18).

8. A method for mounting a joint housing (10) on a carrier element (34), **characterized by** the following steps:
- providing a joint housing (10) according to any of claims 1 to 4;
- providing a carrier element (34) with an assembly opening (52);
- axially introducing the sheet-metal part (14) of the joint housing (10) into the assembly opening (52) until its circumferential wall portion (18) adjoins an edge (53) of the assembly opening (52);
- plastically deforming the sheet-metal part (14) such that it is positively and/or non-positively fixed at the carrier element (34).

9. The method according to claim 8, **characterized in that** a forming tool (68) engages into the sheet-metal part (14) and radially expands the circumferential wall portion (18) by plastic deformation such that a non-positive connection is obtained between the circumferential wall portion (18) and the edge (53) of the assembly opening (52).

10. The method according to claim 9, **characterized in that** by the forming tool (68), the assembly opening (52) of the carrier element (34) also is radially expanded.

11. The method according to any of claims 8 to 10, **characterized in that** the sheet-metal part (14) has a radial tab (32) at a free edge (30) of the portion formed with two layers, wherein the joint housing (10) is inserted into the assembly opening (52) of the carrier element (34) until the radial tab (32) supports on an edge (53) of the assembly opening (52).

12. The method according to any of claims 8 to 11, **characterized in that** the edge (53) is formed such that a diameter of the assembly opening (52) is reduced in axial direction towards the portion formed with two layers of the circumferential wall portion (18), in particular is reduced incrementally, wherein a forming tool (68) adapted to the edge contour of the assembly opening (52) engages into the sheet-metal part (14) and in the region of the assembly opening (52) positively deforms the circumferential wall portion (18) of the sheet-metal part (14) to the edge contour of the assembly opening (52).

## Revendications

1. Boîtier d'articulation d'une articulation sphérique (12), comportant
une pièce de tôle (14) sensiblement à symétrie de révolution par rapport à un axe d'articulation (A) pour le logement d'une tête sphérique (16) et qui présente un tronçon de paroi périphérique (18),
le tronçon de paroi périphérique (18) présentant à une extrémité axiale (24) un orifice de boîtier (26) à travers lequel un pivot d'articulation (28) est apte à s'étendre, **caractérisé en ce que**
la pièce de tôle (14), à cette extrémité axiale (24) du tronçon de paroi périphérique (18), est réalisée en deux couches et présente sur un bord libre (30) du tronçon réalisé en deux couches une saillie radiale (32), et **en ce que** celle-ci, vue en section longitudinale axiale, est réalisée sous forme de logement (35) en forme de U adapté pour le logement d'un soufflet d'étanchéité (36).

2. Boîtier d'articulation selon la revendication 1, **caractérisé en ce que** la pièce de tôle (14) est réalisée à une première extrémité axiale (22) du tronçon de paroi périphérique (18) en une couche et présente un orifice d'insertion (64) à travers lequel le pivot d'articulation (28) est apte à être inséré, et est réalisée à une deuxième extrémité axiale (24) du tronçon de paroi périphérique (18) en deux couches et présente l'orifice de boîtier (26), un couvercle de boîtier (200) étant prévu pour la fermeture de l'orifice d'insertion (64).

3. Boîtier d'articulation selon la revendication 1, **caractérisé en ce que** la pièce de tôle (14) pour le logement de la tête sphérique (16) est réalisée en forme de pot et présente le tronçon de paroi périphérique (18) et un tronçon de fond (20), le tronçon de paroi périphérique (18) étant fermé à une première extrémité axiale (22) par le tronçon de fond (20) et présentant à une deuxième extrémité axiale opposée (24) l'orifice de boîtier (26).

4. Boîtier d'articulation selon la revendication 3, **caractérisé en ce que** la pièce de tôle (14) en forme de pot est réalisée en deux couches dans la zone de transition entre le tronçon de paroi périphérique (18) et le tronçon de fond (20) et forme un pli de tôle (38) circonférentiel.

5. Articulation sphérique, **caractérisée par**
un boîtier d'articulation (10) selon l'une des revendications précédentes,
un pivot d'articulation (28) qui comprend une tête sphérique (16) reçue dans le boîtier d'articulation (10) et une tige (40), et
un soufflet d'étanchéité (36) qui présente un premier bord axial (57) fixé sur le boîtier d'articulation (10) et un deuxième bord axial (59) fixé sur la tige (40),
le premier bord axial (57) du soufflet d'étanchéité (36) s'étendant dans le logement (35) en forme de U moulé sur le boîtier d'articulation (10),
le premier bord axial (57) étant fixé dans le logement (35) en forme de U par coopération de formes et/ou par une liaison par friction.

6. Ensemble, **caractérisé par**
un boîtier d'articulation (10) selon l'une des revendications 1 à 4, et
un élément de soutien (34) qui présente un orifice de montage (52) entouré d'un tronçon de retenue (72),
le tronçon de paroi périphérique (18) du boîtier d'articulation (10) s'étendant à travers l'orifice de montage (52),
le tronçon de retenue (72) entourant le tronçon de paroi périphérique (18) du boîtier d'articulation (10) avec une telle précontrainte que le boîtier d'articulation (10) soit retenu dans le tronçon de retenue (72) par une liaison par friction.

7. Ensemble selon la revendication 6, **caractérisé en ce que** la pièce de tôle (14) est pourvue de surfaces de support (74) en appui sur le bord (53) dans le sens axial, en particulier sous forme d'évasements à gradins à une première extrémité axiale (22) du tronçon de paroi périphérique (18) et/ou d'un tronçon de paroi en deux couches à une deuxième extrémité axiale (24) du tronçon de paroi périphérique (18).

8. Procédé de montage d'un boîtier d'articulation (10) sur un élément de soutien (34), **caractérisé par** les étapes suivantes :
- il est prévu un boîtier d'articulation (10) selon l'une des revendications 1 à4;
- il est prévu un élément de soutien (34) présentant un orifice de montage (52) ;
- la pièce de tôle (14) du boîtier d'articulation (10) est insérée axialement dans l'orifice de montage (52) jusqu'à ce que son tronçon de paroi périphérique (18) soit adjacent à un bord (53) de l'orifice de montage (52) ;
- la pièce de tôle (14) est façonnée plastiquement de manière à être fixée sur l'élément de soutien (34) par coopération de formes et/ou par coopération de forces.

9. Procédé selon la revendication 8, **caractérisé en ce qu'**un outil de façonnage (68) s'engage dans la pièce de tôle (14) et évase le tronçon de paroi périphérique (18) radialement par façonnage plastique de manière à réaliser une liaison par coopération de forces entre le tronçon de paroi périphérique (18) et le bord (53) de l'orifice de montage (52).

10. Procédé selon la revendication 9, **caractérisé en ce que** l'orifice de montage (52) de l'élément de soutien (34) est également évasé radialement par l'outil de façonnage (68).

11. Procédé selon l'une des revendications 8 à 10, **caractérisé en ce que** la pièce de tôle (14) présente sur un bord libre (30) du tronçon réalisé en deux couches une saillie radiale (32), le boîtier d'articulation (10) étant introduit dans l'orifice de montage (52) de l'élément de soutien (34) jusqu'à ce que la saillie radiale (32) prenne appui sur un bord (53) de l'orifice de montage (52).

12. Procédé selon l'une des revendications 8 à 11, **caractérisé en ce que** le bord (53) est réalisé de telle sorte qu'un diamètre de l'orifice de montage (52) diminue, en particulier diminue en gradins dans le sens axial en direction de la partie du tronçon de paroi périphérique (18) qui est réalisée en deux couches, un outil de façonnage (68) adapté au contour du bord de l'orifice de montage (52) s'engageant dans la pièce de tôle (14) et façonnant le tronçon de paroi périphérique (18) de la pièce de tôle (14) dans la zone de l'orifice de montage (52) pour une coopération de formes avec le contour du bord de l'orifice de montage (52).
